# EUROPEAN PATENT APPLICATION

(11) **EP 4 809 967 A1**
(43) Date of publication of application: **23.09.2026**
(21) Application number: 26165182.2
(22) Date of filing: 16.03.2026
(51) Int. Cl.: A61C 1/00, A61C 1/08, A61C 3/025, A61C 17/20

(54) **METHOD FOR WASHING PREVENTIVE DENTAL DEVICE, PREVENTIVE DENTAL DEVICE, AND PROGRAM**

(30) Priority: 19.03.2025 JP 2025046002
(71) Applicant: Nakanishi Inc., Kanuma-shi, Tochigi 322-8666 (JP)
(72) Inventor: YAMADA, Kensuke, Tochigi, 3228666 (JP); TOCHIGI, Manami, Tochigi, 3228666 (JP); KOJIMA, Shunsuke, Tochigi, 3228666 (JP)
(74) Representative: Lewis Silkin LLP

(57) **Abstract**

A method for washing a preventive dental device is provided. The preventive dental device includes a plurality of dental handpieces each having a water injection port and a body portion to which the dental handpieces are connected. The body portion has an internal liquid feeding path connected to a water supply source and supplies the water the dental handpieces. The method washes a plurality of branched liquid feeding paths branched from the internal liquid feeding path toward the respective water injection ports by feeding a liquid such as water or a chemical solution. The method includes supplying the liquid from the water supply source to the internal liquid feeding path; and intermittently supplying the liquid to the branched liquid feeding paths from branch points between the internal liquid feeding path and the branched liquid feeding paths to the respective water injection ports.

## Description

### TECHNICAL FIELD

The present invention relates to a method for washing a preventive dental device, a preventive dental device, and a program.

### BACKGROUND ART

A preventive dental device is known in which tooth surface cleaning powder stored in a container is mixed with compressed air to generate a powder mixed gas, and the powder mixed gas and water are injected onto a tooth surface from a nozzle provided at a tip of a tooth surface cleaning handpiece to clean the tooth surface (for example, JP2008-229340A).

In addition to the tooth surface cleaning handpiece, there is a preventive dental device including a dental calculus removing handpiece that removes dental calculus by ultrasonically vibrating a metal tip (also referred to as a scaler tip) provided at a tip of the handpiece while injecting water.

Such a preventive dental device including a mechanism that injects water has a liquid feeding path for supplying water to a water injection port of the handpiece, and it is necessary to wash the liquid feeding path using a chemical solution after being used for a predetermined period.

### SUMMARY OF INVENTION

However, due to a difference in a flow path resistance caused by a difference in a length or a shape of the liquid feeding path of each handpiece connected to such a preventive dental device, a liquid feeding amount required for the filling with the chemical solution differs for each handpiece, and a flow rate adjustment during washing is complicated. In addition, a user has only to visually confirm whether the liquid feeding path has been filled with the chemical solution after the chemical solution has been fed to the handpiece, which has reduced a workability of a washing processing.

In addition, when the chemical solution is discharged by water, the flow path resistance is also affected, a discharge efficiency differs for each handpiece, and workability is reduced.

Therefore, an object of the present invention is to provide a method for washing a preventive dental device, a preventive dental device, and a program in which, when the preventive dental device includes a plurality of types of handpieces, a liquid feeding path of each of the handpieces can also be efficiently washed.

The present invention has the following configurations.
(1) A method for washing a preventive dental device, the preventive dental device including a plurality of dental handpieces each having a water injection port that injects water, and a body portion to which the dental handpieces are respectively connected and which has an internal liquid feeding path connected to a water supply source, the preventive dental device feeding the water supplied to the internal liquid feeding path to the dental handpieces, the method for washing a plurality of branched liquid feeding paths branched from the internal liquid feeding path toward the respective water injection ports of the plurality of dental handpieces by feeding a liquid such as water or a chemical solution, the method including:
   supplying the liquid from the water supply source to the internal liquid feeding path; and intermittently supplying the liquid to the branched liquid feeding paths from branch points between the internal liquid feeding path and the branched liquid feeding paths to the water injection ports of the respective dental handpieces when the liquid is fed to the plurality of branched liquid feeding paths.
(2) A preventive dental device including:
   a plurality of dental handpieces each having a water injection port that injects water;
   a body portion to which the dental handpieces are respectively connected and which has an internal liquid feeding path connected to a water supply source; and
   a control unit configured to feed the water supplied to the internal liquid feeding path to the dental handpieces, in which
   when washing a plurality of branched liquid feeding paths branched from the internal liquid feeding path toward the respective water injection ports of the plurality of dental handpieces by feeding a liquid such as water or a chemical solution to the plurality of branched liquid feeding paths, the control unit supplies the liquid from the water supply source to the internal liquid feeding path, and
   when feeding the liquid to the plurality of branched liquid feeding paths from branch points between the internal liquid feeding path and the branched liquid feeding paths to the water injection ports of the respective dental handpieces, the control unit intermittently supplies the liquid to the branched liquid feeding paths.
(3) A program for executing a procedure of a method for washing a preventive dental device, the preventive dental device including a plurality of dental handpieces each having a water injection port that injects water, and a body portion to which the dental handpieces are respectively connected and which has an internal liquid feeding path connected to a water supply source, the preventive dental device feeding the water supplied to the internal liquid feeding path to the dental handpieces, the method for washing a plurality of branched liquid feeding paths branched from the internal liquid feeding path toward the respective water injection ports of the plurality of dental handpieces by feeding a liquid such as water or a chemical solution to the plurality of branched liquid feeding paths, the program causing a computer to execute:
   a procedure of supplying the liquid from the water supply source to the internal liquid feeding path; and intermittently supplying the liquid to the branched liquid feeding paths from branch points between the internal liquid feeding path and the branched liquid feeding paths to the water injection ports of the respective dental handpieces when the liquid is fed to the plurality of branched liquid feeding paths.

According to the present invention, when the preventive dental device includes a plurality of types of handpieces, the liquid feeding path of each of the handpieces can also be efficiently washed.

### BRIEF DESCRIPTION OF DRAWINGS

FIG. 1 is an overall configuration diagram of a preventive dental device according to an embodiment;
FIG. 2 is a diagram schematically illustrating a usage form of a tooth surface cleaning handpiece and a structure of a nozzle portion;
FIG. 3 is a diagram schematically illustrating a usage form of a dental calculus removing handpiece;
FIG. 4 is a diagram illustrating a mechanism for attaching and detaching a mixer and a liquid container disposed on a back side of the body portion;
FIG. 5 is a side view of a mixer;
FIG. 6 is a cross-sectional view of a powder storage portion taken along an up-down direction;
FIG. 7 is a schematic block diagram of the preventive dental device;
FIG. 8 is a flowchart illustrating a basic procedure of washing liquid feeding paths;
FIG. 9 is a diagram schematically illustrating branched liquid feeding paths to the tooth surface cleaning handpiece and the dental calculus removing handpiece;
FIG. 10 is a timing chart when a liquid is supplied to the branched liquid feeding paths of the tooth surface cleaning handpiece and the dental calculus removing handpiece;
FIG. 11 is a diagram illustrating a supply time and a supply stop time when the liquid is intermittently supplied;
FIG. 12 is a timing chart when the liquid is supplied to the branched liquid feeding paths of the tooth surface cleaning handpiece and the dental calculus removing handpiece;
FIG. 13 is a diagram illustrating a state in which an identifier provided in the mixer is detected by a detection unit provided in the body portion of the preventive dental device; and
FIG. 14 is a circuit diagram illustrating a pipe configuration in which functional components are added to a basic configuration of the preventive dental device illustrated in FIG. 7.

### DESCRIPTION OF EMBODIMENTS

Hereinafter, an embodiment of a preventive dental device according to the present invention will be described in detail with reference to the drawings. The preventive dental device includes a plurality of types of dental handpieces each including a water injection mechanism that injects water. Here, a configuration including a tooth surface cleaning handpiece that cleans a tooth surface by injecting water and a powder mixed gas containing tooth surface cleaning powders toward the tooth surface, and a dental calculus removing handpiece that transmits ultrasonic vibration to a tip portion of a scaler tip and injects water to crush and remove dental calculus will be described as an example, but the configuration of the preventive dental device is not limited thereto.

### {Configuration of Preventive Dental Device}

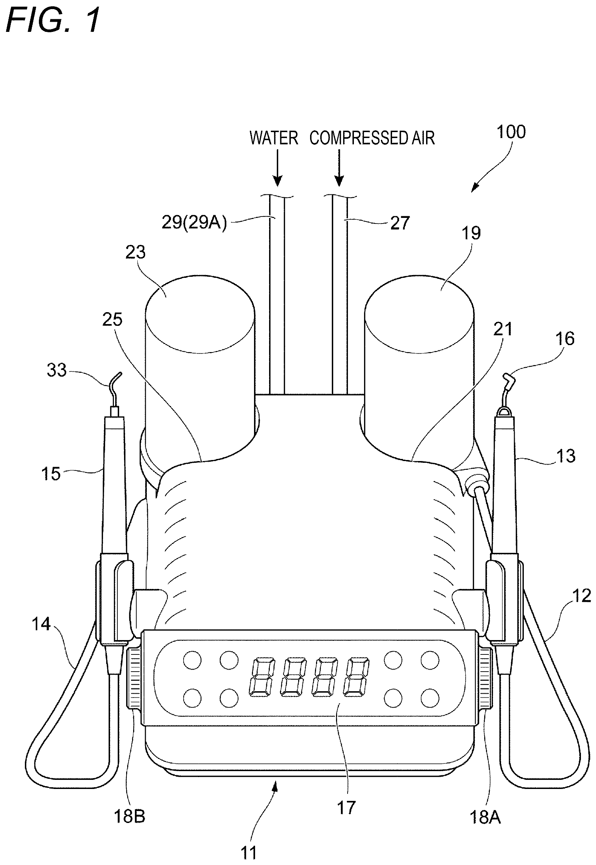

FIG. 1 is an overall configuration diagram of a preventive dental device 100 according to an embodiment. The preventive dental device 100 includes a body portion 11, a mixer 19 and a liquid container 23 detachably provided in the body portion 11, and a plurality of types of dental handpieces connected to the body portion 11. The dental handpieces of this example are a tooth surface cleaning handpiece 13 connected to the body portion 11 through a hose 12, and a dental calculus removing handpiece 15 connected to the body portion 11 through a hose 14. The body portion 11 includes a display operation unit 17, flow rate adjustment knobs 18A and 18B, a mixer mounting portion 21 on which the mixer 19 that stores tooth surface cleaning powders is mounted, and a liquid container mounting portion 25 on which the liquid container 23 that stores a liquid to be supplied to the dental calculus removing handpiece 15 is mounted.

The display operation unit 17 includes a monitor that displays an operation state and the like of the preventive dental device 100, a button that receives an input from a user, and the like. The flow rate adjustment knob 18A can adjust a liquid feeding amount to the tooth surface cleaning handpiece 13, and the flow rate adjustment knob 18B can adjust a liquid feeding amount to the dental calculus removing handpiece 15.

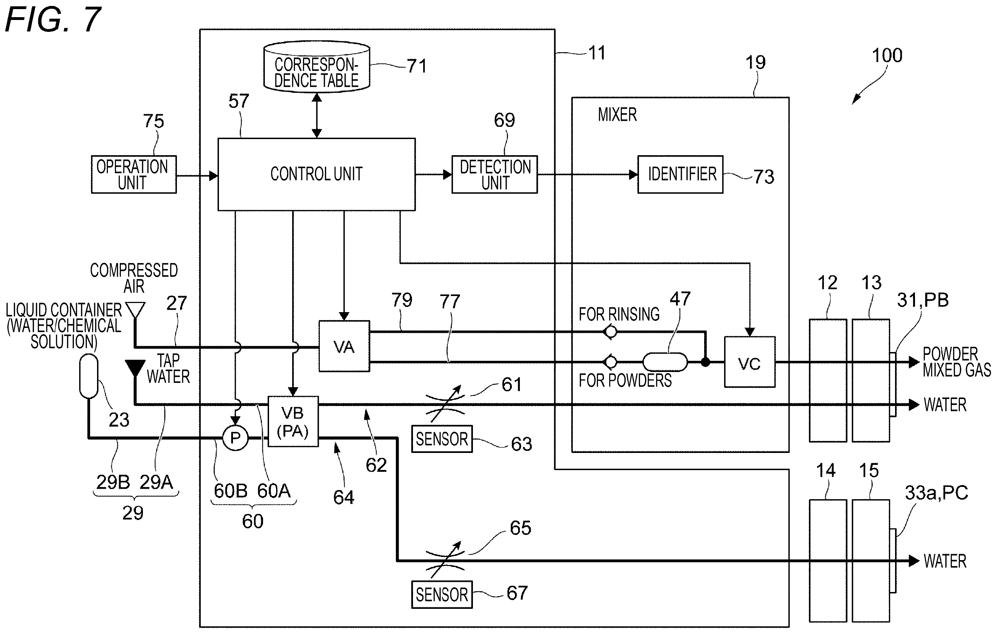

The body portion 11 is connected to a compressed air supply path 27 that supplies compressed air, and a water conduit-side liquid supply path 29A that supplies tap water or a liquid such as water or a chemical solution stored in a tank (not illustrated). The body portion 11 further includes a container-side liquid supply path 29B (see FIG. 7) that supplies the liquid stored in the liquid container 23 to the body portion 11 between the liquid container 23 and the body portion 11. Hereinafter, the water conduit-side liquid supply path 29A and the container-side liquid supply path 29B may be collectively referred to as a liquid supply path 29.

The body portion 11 includes an internal liquid feeding path 60 (see FIG. 7) connected to the liquid supply path 29 serving as a liquid supply source, and feeds a liquid to be supplied to the internal liquid feeding path 60 to the dental handpieces.

The mixer 19 mixes the compressed air supplied from the compressed air supply path 27 and powders stored therein to generate a tooth surface cleaning powder mixed gas.

### {Usage Example of Handpiece }

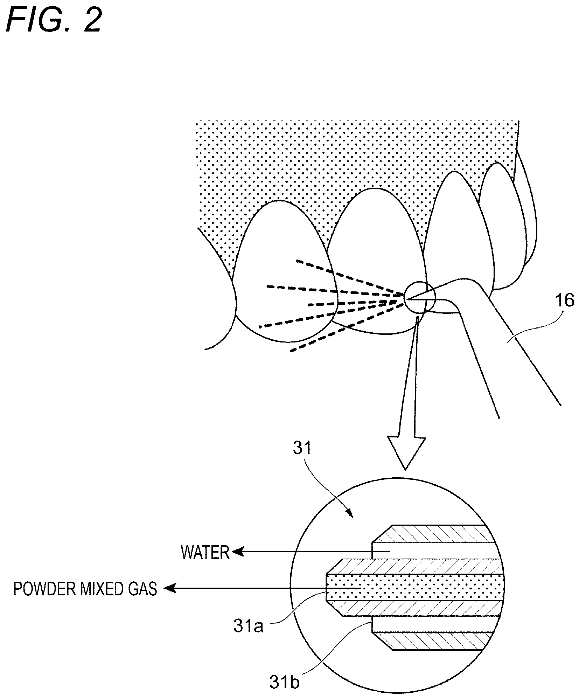

FIG. 2 is a diagram schematically illustrating a usage form of the tooth surface cleaning handpiece 13 and a structure of a nozzle portion. A tip 16 attached to a tip of the tooth surface cleaning handpiece 13 is provided with a nozzle portion 31 that injects the fed powder mixed gas and the liquid supplied from the liquid supply path 29. The nozzle portion 31 has a gas injection port 31a that injects the powder mixed gas at a center thereof, and an annular liquid injection port 31b (water injection port) that is provided on an outer periphery of the gas injection port 31a and injects the liquid. The powder mixed gas fed from the mixer 19, and the liquid are injected from the nozzle portion 31 toward the tooth surface in a spray form, thereby being used for removing dirt attached to the tooth surface.

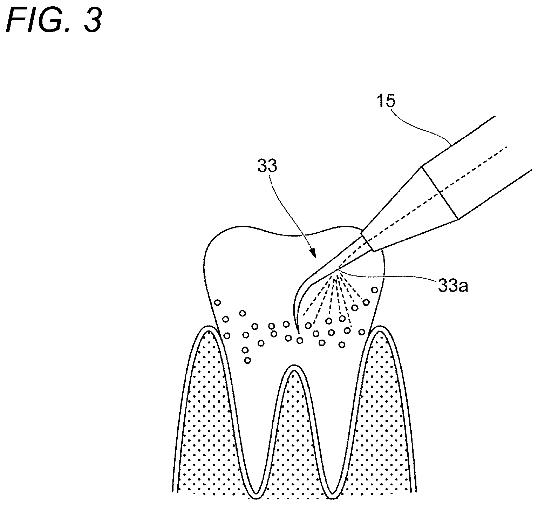

FIG. 3 is a diagram schematically illustrating a usage form of the dental calculus removing handpiece 15. A scaler tip 33 having, for example, a liquid injection port 33a (water injection port) is attached to a tip of the dental calculus removing handpiece 15. The dental calculus removing handpiece 15 is used for removing dental calculus, stain, and the like attached to teeth by, for example, ejecting the liquid from the injection port 33a while applying ultrasonic vibration to the scaler tip 33.

### {Connection of Mixer to Body Portion}

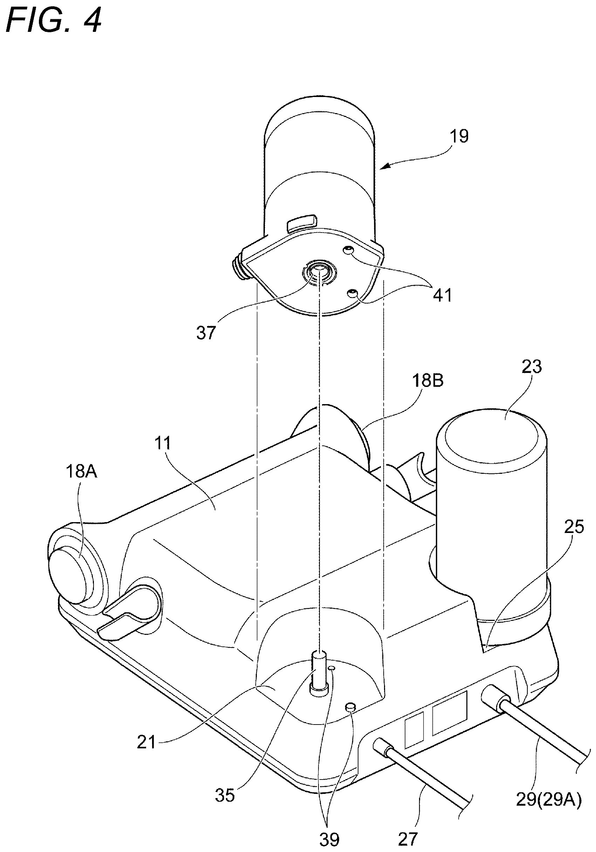

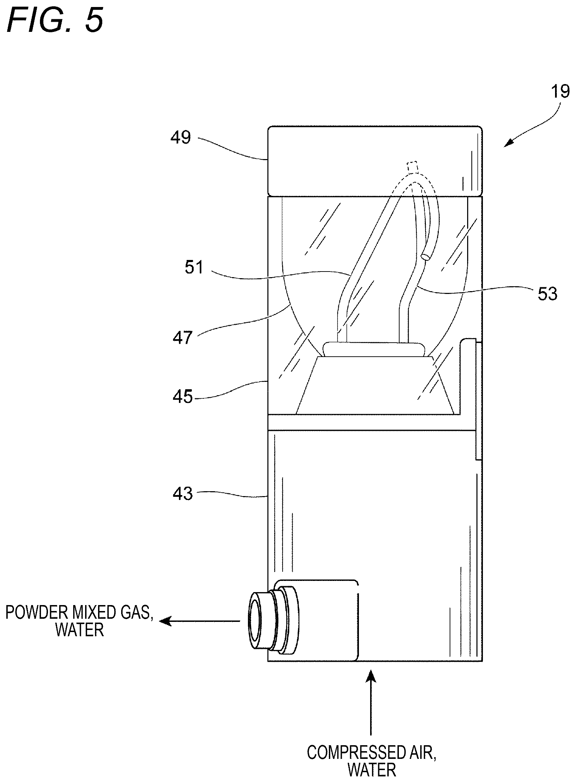

FIG. 4 is a diagram illustrating a mechanism for attaching and detaching the mixer 19 and the liquid container 23 disposed on a back side of the body portion 11. The body portion 11 includes the mixer mounting portion 21 and the liquid container mounting portion 25 on the back side thereof. A mixer connection portion 35 that supplies the compressed air to the mixer 19 is provided protruding upward in the mixer mounting portion 21. The mixer connection portion 35 is inserted into an insertion port 37 provided at a bottom portion of the mixer 19, and supplies the compressed air from the compressed air supply path 27 to a powder storage portion 47 (FIG. 5) to be described later.

One or a plurality of projection pieces 39 protruding upward are provided at predetermined positions of the mixer mounting portion 21. In addition, engagement holes 41 are formed in the bottom portion of the mixer 19 at positions corresponding to the projection pieces 39. When the mixer 19 is mounted on the mixer mounting portion 21, the projection pieces 39 and the engagement holes 41 are engaged with each other to regulate a rotational position of the mixer 19. Although not illustrated, the liquid container 23 is provided with a liquid supply connection portion that supplies the liquid to a bottom portion of the liquid container 23 in a protruding manner, and is connected to a connection port provided in the liquid container mounting portion 25 when the liquid container 23 is mounted on the body portion 11, and the liquid in the liquid container 23 is supplied to the body portion 11.

FIG. 5 is a side view of the mixer 19. The mixer 19 is formed in a cylindrical shape as a whole. A valve or a pipe (not illustrated) is disposed inside a lower case 43 below the mixer 19. The powder storage portion 47 that stores powders, and a lid 49 that closes an opening of the powder storage portion 47 are disposed inside an upper case 45 above the mixer 19. An air feeding pipe 51 and a mixed gas discharge pipe 53 are provided inside the powder storage portion 47 so as to extend from a bottom portion.

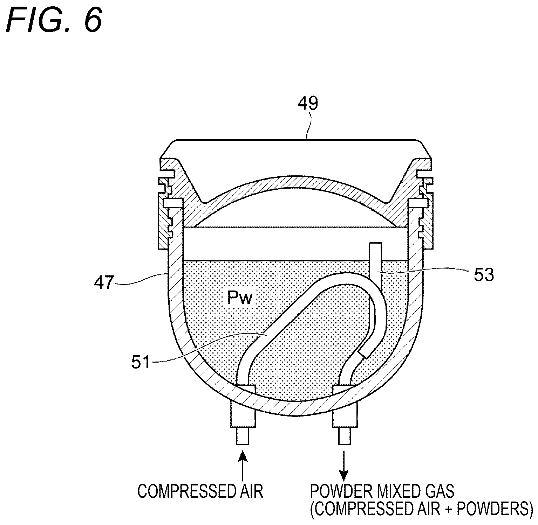

FIG. 6 is a cross-sectional view of the powder storage portion 47 taken along an up-down direction. Powders Pw are stored inside the powder storage portion 47. When the compressed air is fed from an outlet of the air feeding pipe 51 to the powder storage portion 47, the powders Pw are stirred by a flow of the compressed air in the powder storage portion 47, and a powder mixed gas is generated in the powder storage portion 47. The generated powder mixed gas is discharged from the powder storage portion 47 through the mixed gas discharge pipe 53, and is fed toward the tooth surface cleaning handpiece 13.

### {Internal Configuration and Basic Operation of Preventive Dental Device }

Next, an internal configuration and an operation example of the preventive dental device 100 having the above-described configuration will be described with reference to a block diagram.

FIG. 7 is a schematic block diagram of the preventive dental device 100.

The mixer 19 includes the powder storage portion 47, a control valve VC, and an identifier 73. Examples of the powders to be used include calcium carbonate, sodium bicarbonate, and glycine. The powders have various particle diameters, such as 40 µm and 25 µm. Flow characteristics in an air feeding path may differ depending on types of powders, and the configuration of the air feeding path in the mixer 19 may also be changed depending on the types of powders to be used.

The body portion 11 of the preventive dental device 100 includes a control unit 57, a pump P, control valves VA and VB, flow rate adjusting valves 61 and 65, valve opening degree sensors 63 and 67, a detection unit 69, and a correspondence table 71.

The flow rate adjusting valves 61 and 65 that adjust a flow rate of the water or the chemical solution are, for example, needle valves, and valve opening degrees are changed by the user rotating the flow rate adjustment knobs 18A and 18B (FIG. 1). The valve opening degree sensors 63 and 67 detect the valve opening degrees of the flow rate adjusting valves 61 and 65.

The detection unit 69 detects the identifier 73 provided in the mixer 19.

The control valve VA is connected to a first air feeding path 77 that feeds air to the powder storage portion 47 in the mixer 19 and a second air feeding path 79 that feeds air bypassing the powder storage portion 47. By feeding the compressed air to the first air feeding path 77, the compressed air from the air feeding pipe 51 in the powder storage portion 47 illustrated in FIG. 6 stirs the powders in the powder storage portion 47 to generate a powder mixed gas. The generated powder mixed gas is fed from the mixed gas discharge pipe 53 and an outlet of the mixed gas discharge pipe 53 to the nozzle portion 31 of the tooth surface cleaning handpiece 13 through the hose 12, and the powder mixed gas is injected from the nozzle portion 31.

On the other hand, when the compressed air is supplied to the second air feeding path 79, only the compressed air is ejected from the nozzle portion 31 of the tooth surface cleaning handpiece 13. The injection of only the compressed air is mainly used for confirming a cleaning state of a tooth surface during cleaning the tooth surface, and is used for a rinsing processing of blowing off water or powders remaining on the tooth surface of a patient. The control valve VC in the mixer 19 starts and stops supplying air to the tooth surface cleaning handpiece 13.

An operation unit 75, such as a foot switch or the display operation unit 17 (FIG. 1), is connected to the control unit 57 to receive an operation instruction from the user.

The control unit 57 is a computer device, and includes, for example, a processor such as a central processing unit (CPU) or a micro processing unit (MPU), and a storage device including a memory such as a read only memory (ROM) or a random access memory (RAM). The control unit 57 implements various functions by reading and executing a program stored in the storage device.

The correspondence table 71 stores data to be used during washing the liquid feeding path to be described later, and stores information on liquid feeding conditions, such as an appropriate ON time and an appropriate OFF time in the valve VB or the like, for each type or individual of the handpieces 13 and 15 or the mixer 19.

In the preventive dental device 100, according to an input instruction from the operation unit 75, the control unit 57 feeds the supplied compressed air to the powder storage portion 47 through the control valve VA to generate a powder mixed gas inside the powder storage portion 47, and controls the control valve VC to inject the generated powder mixed gas from the nozzle portion 31 of the tooth surface cleaning handpiece 13.

The tap water or the water supplied from the liquid container 23 is fed to the control valve VB through the liquid supply path 29 and the internal liquid feeding path 60 connected to the liquid supply path 29. The water supplied to the control valve VB is ejected from either the nozzle portion 31 of the tooth surface cleaning handpiece 13 or the injection port 33a of the dental calculus removing handpiece 15 through the control valve VB controlled according to an input instruction from the operation unit 75.

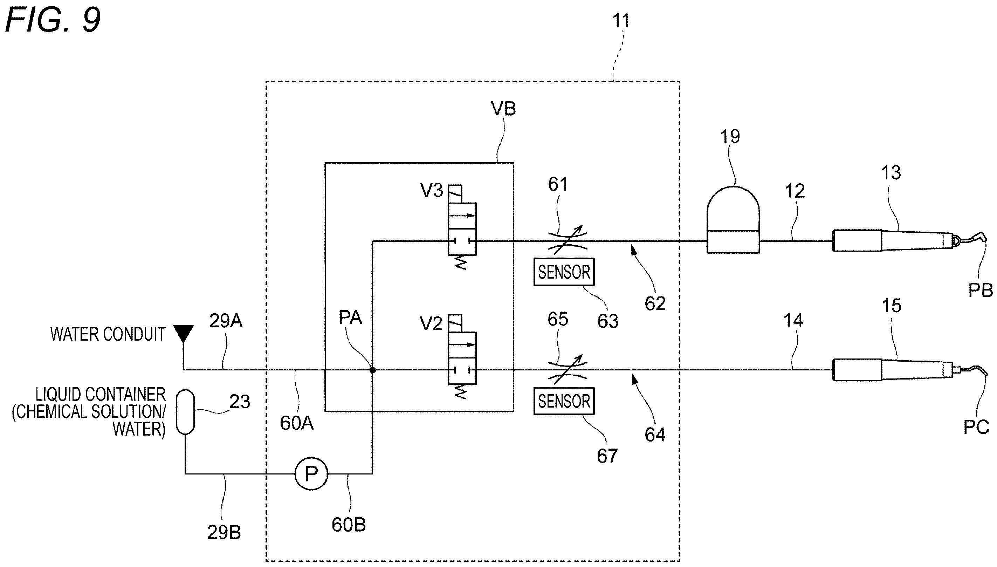

More specifically, inside the body portion 11, there is a two-system internal liquid feeding path 60 including a water conduit-side internal liquid feeding path 60A connected to the water conduit-side liquid supply path 29A and a container-side internal liquid feeding path 60B connected to the container-side liquid supply path 29B. The water conduit-side internal liquid feeding path 60A and the container-side internal liquid feeding path 60B are merged and branched at a branch point PA (see FIG. 9) to be described later, and are connected to a branched liquid feeding path 62 on a tooth surface cleaning handpiece side and a branched liquid feeding path 64 on a dental calculus removing handpiece side downstream of the branch point PA.

By a setting operation from the display operation unit 17, the user can use the tooth surface cleaning handpiece 13 to perform a prophy mode in which the powder mixed gas and the water are injected toward, for example, the tooth surface of the patient, or a periodontal mode in which the tooth surface cleaning handpiece is replaced with a mixer that stores periodontal pocket powders (not illustrated), or a periodontal pocket handpiece, and the powders are injected into a periodontal pocket. By the processing of each mode described above, the tooth surface can be cleaned, and plaque, dental calculus, stain, and the like attached to the periodontal pocket can be removed.

The dental calculus and the like attached to the tooth surface can be removed using the dental calculus removing handpiece 15 having the scaler tip 33 attached to a tip of the handpiece. Specifically, the scaler tip 33 to which the ultrasonic vibration is applied is brought into contact with, for example, a subgingival margin, a supragingival margin, and an interdental part of the patient while injecting the water.

### {Cleaning of Equipment of Preventive Dental Device }

In the preventive dental device 100, equipment is cleaned after the equipment of the treatment as described above is used. There are various parts as a cleaning location of the equipment, and in particular, dirt, water scale, limescale, and the like associated with the use are likely to be attached to the liquid feeding paths to the tooth surface cleaning handpiece 13 and the dental calculus removing handpiece 15 (hereinafter, also referred to as the handpieces 13 and 15). In order to prevent clogging or growth of bacteria in the liquid feeding path, it is necessary to periodically wash the liquid feeding path. The washing of the liquid feeding path includes an immersion processing in which a chemical solution (for example, a washing liquid such as an immersion washing agent) is fed to at least a liquid feeding path from an inlet (connection portion with the liquid supply source) of the internal liquid feeding path 60 (60A and 60B) of the body portion 11 to a tip of the nozzle portion 31 of the tooth surface cleaning handpiece 13, and a liquid feeding path to the injection port 33a of the dental calculus removing handpiece 15, and the liquid feeding paths are immersed for a predetermined time in a state of being filled with the chemical solution. The washing processing is processing automatically performed according to a predetermined sequence, and the processing is started by a user operation such as pressing a button of the display operation unit 17 of the body portion 11.

### {Procedure of Washing Liquid Feeding Path}

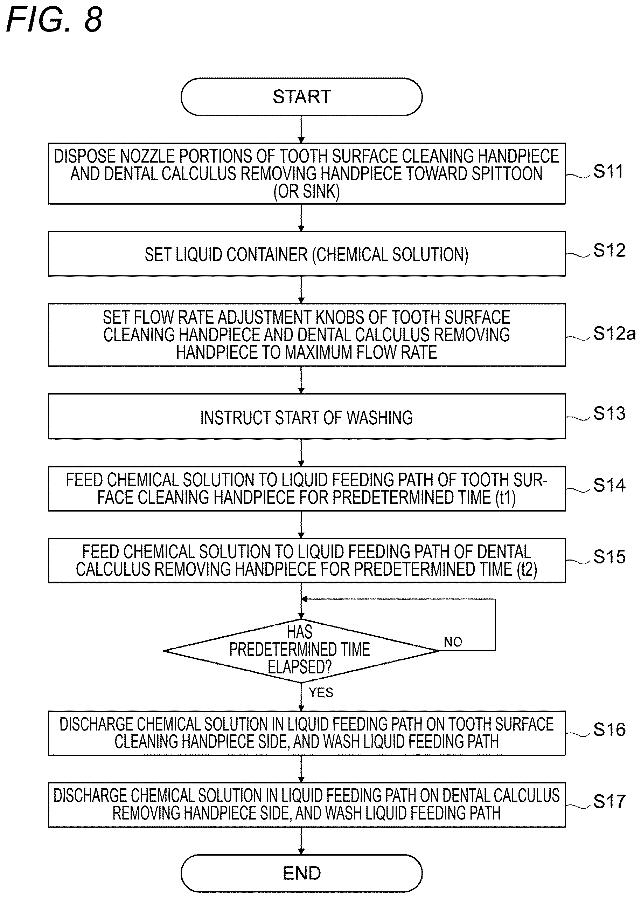

The washing of the liquid feeding paths to the tooth surface cleaning handpiece 13 and the dental calculus removing handpiece 15 connected to the above-described preventive dental device 100 will be described in detail. FIG. 8 is a flowchart illustrating a basic procedure of washing the liquid feeding paths. First, as advance preparation, the user disposes the nozzle portions of the tooth surface cleaning handpiece 13 and the dental calculus removing handpiece 15 toward a spittoon (or sink) (S11), and sets the liquid container containing a chemical solution in the body portion 11 (S12). Next, the user adjusts the flow rate adjustment knobs 18A and 18B to set a maximum flow rate (S12a).

Then, when the display operation unit 17 (see FIG. 1) of the body portion 11 is operated to instruct the start of washing of the liquid feeding path (S13), the control unit 57 refers to the correspondence table 71, and fills the liquid feeding path (container-side internal liquid feeding path 60B and branched liquid feeding path 62) of the tooth surface cleaning handpiece 13 with the chemical solution by feeding the chemical solution for a predetermined time (liquid feeding time t1) (S14). At this time, the chemical solution is intermittently supplied to the branched liquid feeding path 62 for the predetermined time (liquid feeding time t1).

Further, after the feeding of the chemical solution to the liquid feeding path of the tooth surface cleaning handpiece 13 is completed, the liquid feeding path (container-side internal liquid feeding path 60B and branched liquid feeding path 64) of the dental calculus removing handpiece 15 is filled with the chemical solution by feeding the chemical solution for a predetermined time (liquid feeding time t2) (S15). At this time, the chemical solution is intermittently supplied to the branched liquid feeding path 64 for the predetermined time (liquid feeding time t2).

In this way, after the liquid feeding path of the tooth surface cleaning handpiece 13 and the liquid feeding path of the dental calculus removing handpiece 15 are filled with the chemical solution, the liquid feeding paths are immersed in the chemical solution for a predetermined time (specified time). Then, a predetermined time elapses, the discharge of the chemical solution in the liquid feeding path on the tooth surface cleaning handpiece side, and the washing of the liquid feeding path are performed by the water and the compressed air (S16), and then the discharge of the chemical solution in the liquid feeding path on the dental calculus removing handpiece side, and the washing of the liquid feeding path are similarly performed (S17), and a washing processing is completed. In the step of discharging the chemical solution and washing the liquid feeding path (S16 and S17), the water is intermittently supplied to the branched liquid feeding paths 62 and 64.

FIG. 9 is a diagram schematically illustrating the branched liquid feeding paths 62 and 64 to the tooth surface cleaning handpiece 13 and the dental calculus removing handpiece 15. The tap water, and the chemical solution or water stored in the liquid container 23 can be supplied to the handpieces 13 and 15. Here, a position at which the tap water, and the chemical solution or water from the liquid container 23 are supplied and merged (position at which the water conduit-side internal liquid feeding path 60A and the container-side internal liquid feeding path 60B are merged) is defined as a point PA. In addition, a position of the nozzle portion 31 of the tooth surface cleaning handpiece 13 is defined as a point PB, and a position of the injection port 33a of the dental calculus removing handpiece 15 is defined as a point PC. The branched liquid feeding path 62 from the point PA to the point PB includes an electromagnetic valve V3 forming the control valve VB, the flow rate adjusting valve 61, the hose 12, and internal pipelines of the mixer 19 and the tooth surface cleaning handpiece 13. In addition, the branched liquid feeding path 64 from the point PA to the point PC includes an electromagnetic valve V2 forming the control valve VB, the flow rate adjusting valve 65, the hose 14, and an internal pipeline of the dental calculus removing handpiece 15.

When the chemical solution is immersed in the liquid feeding paths of the tooth surface cleaning handpiece 13 and the dental calculus removing handpiece 15, it is ideal that the chemical solution is fed toward the handpieces 13 and 15, the handpieces 13 and 15 are filled with the chemical solution, and the liquid feeding is automatically stopped without unnecessarily overflowing the chemical solution from liquid path outlets of the respective handpieces 13 and 15. However, the branched liquid feeding path 62 from the point PA to the point PB and the branched liquid feeding path 64 from the point PA to the point PC have different configurations in a middle of the flow path, and thus have different actual liquid path lengths. A flow path resistance of the branched liquid feeding path 62 is larger than a flow path resistance of the branched liquid feeding path 64. Therefore, when the chemical solution is simultaneously fed to the respective branched liquid feeding paths 62 and 64 of the tooth surface cleaning handpiece 13 and the dental calculus removing handpiece 15, a large amount of chemical solution flows to the liquid feeding path having a small flow path resistance, and an efficiency decreases when both the branched liquid feeding paths 62 and 64 are filled with the chemical solution.

Therefore, in the preventive dental device 100 of this configuration, by individually feeding the chemical solution to the branched liquid feeding paths 62 and 64 of the handpieces 13 and 15, the deviation of the liquid feeding amount when the chemical solution is simultaneously fed is eliminated, and the washing efficiency is improved further by intermittently supplying the chemical solution to the branched liquid feeding paths.

Similarly, in the washing with the water when the chemical solution is discharged, the washing efficiency is improved by separately and intermittently feeding the water to the branched liquid feeding paths 62 and 64.

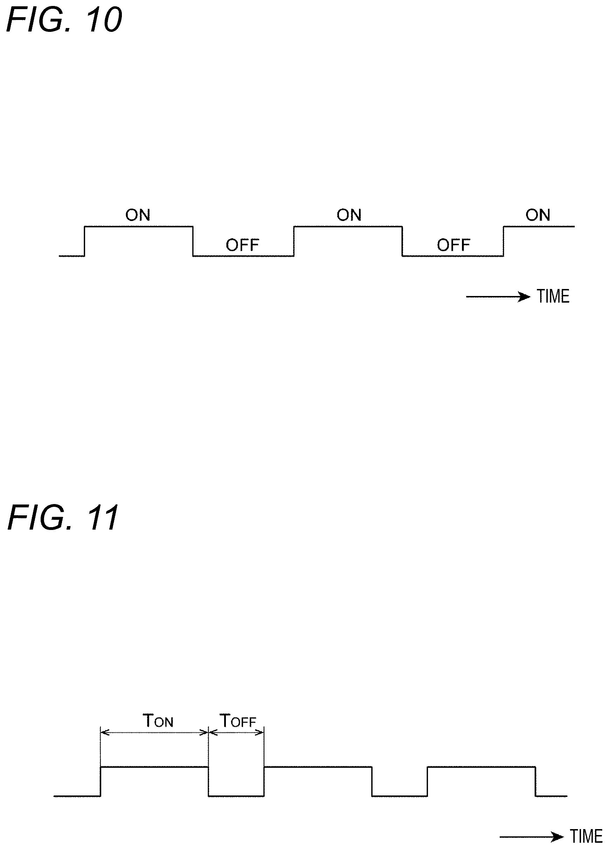

FIG. 10 is a timing chart when the liquid is supplied to the branched liquid feeding paths 62 and 64 of the tooth surface cleaning handpiece 13 and the dental calculus removing handpiece 15. The supply of the chemical solution (water or tap water in some cases) from the liquid container 23 to the tooth surface cleaning handpiece 13 is started or stopped by turning on or off the electromagnetic valve V3 illustrated in FIG. 9. Similarly, the supply to the dental calculus removing handpiece 15 is started or stopped by turning on or off the electromagnetic valve V2. As illustrated in FIG. 10, by feeding the liquid such as water or a chemical solution so as to be intermittently supplied to the liquid feeding paths of the handpieces 13 and 15, a momentum in the flow of the chemical solution is increased, a liquid feeding efficiency such as promotion of discharge of bubbles is improved, and the liquid feeding paths are easily filled with the chemical solution without a gap. In the present embodiment, as illustrated in FIG. 8, the chemical solution is fed to the branched liquid feeding path 64 on the dental calculus removing handpiece 15 side after the filling of the branched liquid feeding path 62 on a tooth surface cleaning handpiece 13 side with the chemical solution is completed, and thus the electromagnetic valve V2 is in an off state while the electromagnetic valve V3 is repeatedly turned on and off (liquid feeding time t1), and the electromagnetic valve V3 is in an off state while the electromagnetic valve V2 is repeatedly turned on and off (liquid feeding time t2).

FIG. 11 is a diagram illustrating a supply time and a supply stop time when the liquid is intermittently supplied. The chemical solution to the liquid feeding paths of the handpieces 13 and 15 is preferably fed by making a supply time T_{ON} for supplying the chemical solution longer than a supply stop time T_{OFF} for stopping supplying the chemical solution (T_{ON} > T_{OFF}). Accordingly, a liquid feeding amount per unit time increases, a time until filling can be shortened, and the liquid feeding efficiency can be improved.

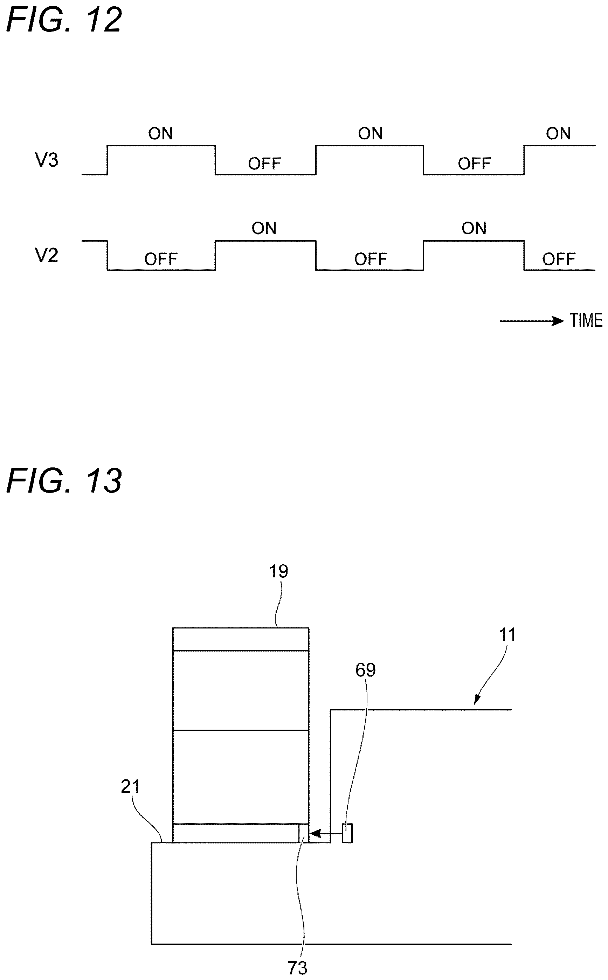

FIG. 12 is a timing chart when the liquid is supplied to the branched liquid feeding paths 62 and 64 of the tooth surface cleaning handpiece 13 and the dental calculus removing handpiece 15.

In the above-described washing method (see FIG. 8), after the feeding of the chemical solution to the liquid feeding path of the tooth surface cleaning handpiece 13, and the filling of the liquid feeding path with the chemical solution are completed (S14), and the feeding of the chemical solution to the liquid feeding path of the dental calculus removing handpiece 15, and the filling of the liquid feeding path with the chemical solution are performed (S15). In addition, regarding the discharge of the filled chemical solution, after the water is fed to the liquid feeding path of the tooth surface cleaning handpiece 13, and the discharge of the chemical solution and the washing of the liquid feeding path are completed (S16), the water is fed to the liquid feeding path of the dental calculus removing handpiece 15, and the discharge of the chemical solution and the washing of the liquid feeding path are performed (S17).

In order to further efficiently wash the liquid feeding path, as illustrated in FIG. 12, it is also possible to feed the liquid to the branched liquid feeding path 64 on the dental calculus removing handpiece 15 side before a liquid feeding processing to the branched liquid feeding path 62 on the tooth surface cleaning handpiece 13 side is completed.

At this time, the liquid is fed to the branched liquid feeding paths 62 and 64 during an OFF time (supply stop time) of the other branched liquid feeding paths 64 and 62 by alternately turning on and off the electromagnetic valve V2 and the electromagnetic valve V3, and thus the time can be shortened, and the liquid can be efficiently fed as compared with a processing of completing the liquid feeding processing for each of the branched liquid feeding paths 62 and 64.

An ON time (liquid feeding time) and an OFF time (liquid feeding stop time) of the electromagnetic valve V2 and the electromagnetic valve V3 may be changed for each type of the handpieces 13 and 15 or the hoses 12 and 14 used. This is because a length of the liquid feeding path or the flow path resistance may differ depending on the type of the handpieces 13 and 15 or the hoses 12 and 14. In this case, for each type of the handpieces 13 and 15 or the hoses 12 and 14 connected to the branched liquid feeding paths 62 and 64, the information on the liquid feeding conditions such as an appropriate ON time and an appropriate OFF time is obtained in advance by an experiment or the like, and is stored in the correspondence table 71 illustrated in FIG. 7. During washing, by the operation of the display operation unit 17 by the user, the control unit 57 refers to the correspondence table 71, and feeds the liquid under the liquid feeding conditions corresponding to the handpieces 13 and 15 and the hoses 12 and 14. Accordingly, when different types of the handpieces 13 and 15 or different types of the hoses 12 and 14 are used, the liquid can also be efficiently fed under appropriate liquid feeding conditions. The liquid feeding conditions are not limited to the ON time and the OFF time described above, and other parameters, such as a total time from the start of liquid feeding to the stop of liquid feeding, may be set. By setting the total time, it is possible to prevent the liquid such as the water or the chemical solution from being excessively fed and wastefully discharged from the tips of the handpieces 13 and 15.

The types of the handpieces 13 and 15 or the hoses 12 and 14 may be automatically recognized although the user can input information from the display operation unit 17. For example, individual identifiers are provided for the individual handpieces 13 and 15 or hoses 12 and 14, and the detection unit that reads the identifiers of the connected handpieces 13 and 15 or hoses 12 and 14 is provided in the body portion 11. When the hoses 12 and 14 are connected to the body portion 11, the detection unit reads the identifiers of the handpieces 13 and 15 and the hoses 12 and 14, and outputs detection results to the control unit 57. The control unit 57 refers to the correspondence table 71 based on the received detection results and sets appropriate liquid feeding conditions. In this way, it is possible to automatically set the liquid feeding conditions according to the connected handpieces 13 and 15 and hoses 12 and 14.

Regarding the identification of a plurality of mixers 19 that contain different powders, as illustrated in FIG. 7, the individual identifiers 73 are provided for the individual mixers 19, and the detection unit 69 that detects the identifiers 73 is provided in the preventive dental device 100. In this case, by storing a correspondence relation between the types of the identifiers 73 and the types of powders corresponding thereto in the correspondence table 71 in advance, the types of powders can be easily and accurately specified based on the detected identifiers 73, and the types of the mixer 19 to be used can be specified. In addition, regarding the identification of the individual mixer 19, the identifier 73 may have individual information.

FIG. 13 is a diagram illustrating a state in which the identifier 73 provided in the mixer 19 is detected by the detection unit 69 provided in the body portion 11 of the preventive dental device 100. In this configuration, when the mixer 19 is mounted on the mixer mounting portion 21 of the body portion 11, the identifier 73 provided in the mixer 19 is read by the detection unit 69 based on a command of the control unit 57 illustrated in FIG. 7. Then, the types of powders associated with the read identifiers 73 are obtained with reference to the correspondence table 71, and the types of powders stored in the mixer 19 are specified. Examples of the identifier 73 and the detection unit 69 in this case include a combination of a one-dimensional or two-dimensional barcode and a barcode reader that reads the barcode, and a combination of a wireless tag, such as radio frequency identification (RFID), and a reader that reads the wireless tag.

When the equipment used for the treatment of the patient is specified, the control unit 57 sets lengths of the ON time (liquid feeding time) and the OFF time (liquid feeding stop time) of the electromagnetic valve V2 and the electromagnetic valve V3 for each type of the handpieces 13 and 15 or the hoses 12 and 14 used and each type of the mixer 19 in the washing of the liquid feeding path described above. Then, the control unit 57 drives the control valve VB in accordance with an input from the operation unit 75 by the user or a sequence of a program to feed a liquid such as water or a chemical solution toward the tooth surface cleaning handpiece 13 or the dental calculus removing handpiece 15.

In this way, the branched liquid feeding paths 62 and 64 extending toward the tooth surface cleaning handpiece 13 and the dental calculus removing handpiece 15 are washed by being filled with the chemical solution.

According to the washing processing of the branched liquid feeding paths, the liquid such as the water or the chemical solution to be supplied from the liquid supply source is intermittently supplied to the plurality of branched liquid feeding paths branched from the internal liquid feeding path of the body portion 11 toward the handpieces 13 and 15, and thus the liquid moves in the branched liquid feeding paths with a pulsed flow velocity (pressure) change. Accordingly, the remaining bubbles and the like are reduced, and the entire branched liquid feeding paths are easily and uniformly filled with the chemical solution. Further, the liquid is individually fed to the respective branched liquid feeding paths without being fed simultaneously, and thus a pressure of the liquid supplied to the internal liquid feeding path is concentrated on one branched liquid feeding path. As a result, the liquid can be strongly pushed out into the branched liquid feeding paths, and the time required for the feeding of the liquid can also be shortened.

Then, by setting liquid feeding conditions such as a liquid feeding timing and a liquid feeding stop timing of the chemical solution to appropriate conditions according to the types of the handpieces 13 and 15 or the hoses 12 and 14 to be connected, and the mixer 19 to be mounted, the chemical solution can be efficiently fed without waste. Therefore, the handpieces 13 and 15, the hoses 12 and 14, and the mixer 19 can be easily identified by using the identifiers. In this way, when the preventive dental device 100 includes a plurality of types of handpieces, the liquid feeding path of each handpiece can also be efficiently washed.

### {Example of Other Pipe Configuration}

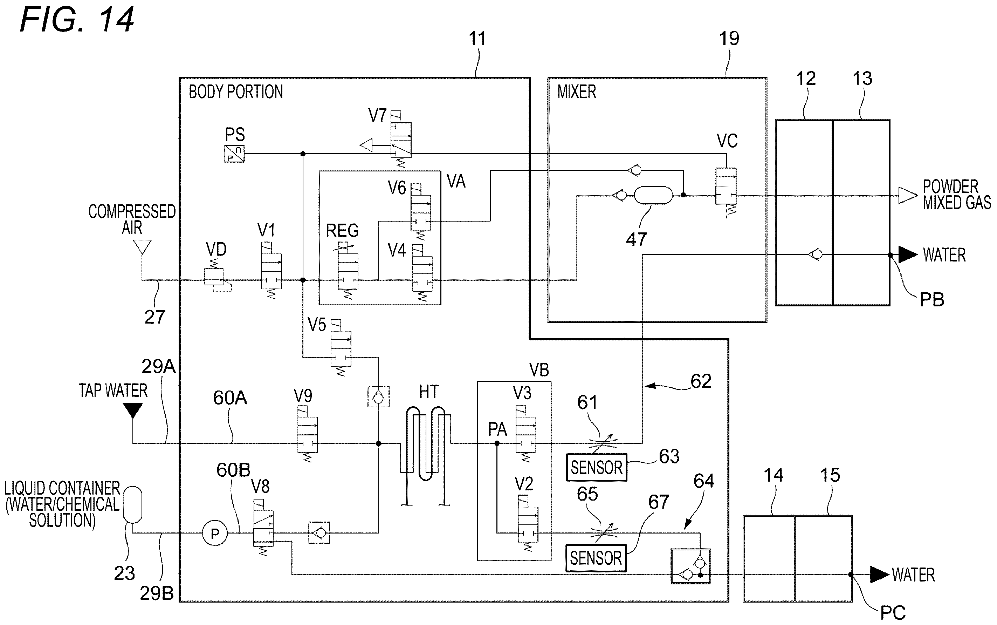

FIG. 14 is a circuit diagram illustrating a pipe configuration in which functional components are added to a basic configuration of the preventive dental device 100 illustrated in FIG. 7. The compressed air supply path 27 that supplies the compressed air into the body portion 11 is provided with a decompression valve VD and an electromagnetic valve V1 between the compressed air supply path 27 and the control valve VA, and the supplied compressed air is decompressed to a desired pressure by the decompression valve VD and supplied to the control valve VA. A supply pressure to the control valve VA is measured by a pressure sensor PS. The control valve VA includes a regulator REG, an electromagnetic valve V4 connected to the powder storage portion 47, and an electromagnetic valve V6 connected to a rinsing flow path. The regulator REG adjusts an air feeding pressure to the mixer 19.

An electromagnetic valve V5 feeds the compressed air to the liquid feeding path after being washed to dry the liquid feeding path. The control valve VC is a pinch valve, and controls opening and closing of the air feeding path by the presence or absence of the compressed air from an electromagnetic valve V7.

In the liquid feeding path, an electromagnetic valve V9 provided in a middle of the flow path for supplying tap water toward the control valve VB in the body portion 11 starts or stops feeding the tap water. In addition, the water or the chemical solution stored in the liquid container 23 is fed to the liquid feeding path in the body portion 11 by driving the pump P. The electromagnetic valve V8 provided at an outlet of the pump P switches a liquid feeding destination of the liquid in the liquid container 23 to either a liquid feeding path toward the control valve VB or a liquid feeding path for discharging the liquid through the dental calculus removing handpiece 15. A heater HT is provided before the flow path of the control valve VB, and the tap water or the liquid from the liquid container 23 is warmed by the heater HT.

The control valve VB switches between a flow path toward the tooth surface cleaning handpiece 13 through the flow rate adjusting valve 61 and a flow path toward the dental calculus removing handpiece 15 through the flow rate adjusting valve 65. Although the description is omitted, check valves are respectively provided at locations at which backflow prevention is required in the circuit. According to the circuit configuration of this configuration, it is possible to easily control each operation mode of the preventive dental device 100. That is, it is possible to selectively perform a powder mode in which the powder mixed gas is injected together with the water using the tooth surface cleaning handpiece 13, an ultrasonic mode in which the tap water or the water or the like from the liquid container 23 is supplied while ultrasonically vibrating the scaler tip 33 using the dental calculus removing handpiece 15, and a mode in which the above-described washing of the liquid feeding path is performed. With this configuration, the adjustment of a supply pressure of the compressed air, the supply and discharge of the compressed air to and from the air feeding path and the liquid feeding path, and the supply and discharge of the tap water and the liquid in the liquid container 23 to and from the liquid feeding path can be implemented with enhanced convenience and safety.

The present invention is not limited to the above-described embodiments, and modifications, improvements, and the like can be made as appropriate. For example, in the embodiments of the present invention, the configuration of the mixer 19 integrally including the powder storage portion 47, the valve, and the like has been described, but the present invention can also be implemented in the preventive dental device having a configuration in which the valve or the like is provided on a body portion 11 side, and only the powder storage portion that stores powders is replaceable. In addition, a material, a shape, a dimension, a numerical value, a form, a number, an arrangement position, and the like of each component in the above-described embodiments are arbitrary and are not limited as long as the present invention can be achieved.

As described above, the following matters are disclosed in the present specification.
(1) A method for washing a preventive dental device, the preventive dental device including a plurality of dental handpieces each having a water injection port that injects water, and a body portion to which the dental handpieces are respectively connected and which has an internal liquid feeding path connected to a water supply source, the preventive dental device feeding the water supplied to the internal liquid feeding path to the dental handpieces, the method for washing a plurality of branched liquid feeding paths branched from the internal liquid feeding path toward the respective water injection ports of the plurality of dental handpieces by feeding a liquid such as water or a chemical solution, the method including:
   supplying the liquid from the water supply source to the internal liquid feeding path; and intermittently supplying the liquid to the branched liquid feeding paths from branch points between the internal liquid feeding path and the branched liquid feeding paths to the water injection ports of the respective dental handpieces when the liquid is fed to the plurality of branched liquid feeding paths.

According to the method for washing a preventive dental device, by intermittently feeding the liquid such as the water or the chemical solution to the branched liquid feeding paths to the plurality of dental handpieces, even if a flow path resistance differs for each of the branched liquid feeding paths, the liquid can be reliably fed to each of the branched liquid feeding paths, and the branched liquid feeding paths can be efficiently filled with the liquid.

(2) The method for washing a preventive dental device according to (1), in which
when the liquid is intermittently supplied to the branched liquid feeding paths, a supply time for supplying the liquid is set to be longer than a supply stop time for stopping the supply of the liquid.

According to the method for washing a preventive dental device, the time for feeding the liquid is longer than the time for stopping the feeding of the liquid, and thus a liquid feeding amount per unit time can be increased.

(3) The method for washing a preventive dental device according to (1) or (2), further including:
when the liquid is fed to the plurality of branched liquid feeding paths, after the feeding of the liquid to any one branched liquid feeding path among the plurality of branched liquid feeding paths is completed,
feeding the liquid to any other one branched liquid feeding path among the plurality of branched liquid feeding paths.

According to the method for washing a preventive dental device, by individually feeding the liquid to each of the branched liquid feeding paths, the deviation of the liquid feeding amount can be eliminated, and the branched liquid feeding path can be filled efficiently with the liquid.

(4) The method for washing a preventive dental device according to (1) or (2), in which
the liquid is sequentially supplied to each of the dental handpieces when the liquid is intermittently supplied to the plurality of branched liquid feeding paths.

According to the method for washing a preventive dental device, by sequentially feeding the chemical solution to the plurality of dental handpieces, when the flow path resistances of the branched liquid feeding paths to the respective handpieces are different from each other, the liquid feeding amount can be appropriately adjusted for each of the branched flow paths.

(5) The method for washing a preventive dental device according to any one of (1) to (4), in which
the body portion includes a powder storage portion that stores a tooth surface cleaning powder, and a mixer that feeds compressed air into the powder storage portion to generate a powder mixed gas containing the powder, and
any one of the plurality of dental handpieces is a tooth surface cleaning handpiece having an air feeding path that is connected to the mixer and configured to supply the powder mixed gas to a nozzle portion for injection together with the water.

According to the method for washing a preventive dental device, it is possible to clean the liquid feeding path of the tooth surface cleaning handpiece that injects the powder mixed gas.

(6) The method for washing a preventive dental device according to (5), further including:
detecting an identifier that is provided in the mixer and differs depending on a type of the mixer by a detection unit provided in the body portion; and
changing a liquid feeding condition for intermittently supplying the liquid to the branched liquid feeding paths, according to a detection result of the identifier by the detection unit.

According to the method for washing a preventive dental device, by changing the liquid feeding condition according to the type of the mixer, the liquid may be fed according to a length of the branched liquid feeding path or the flow path resistance.

(7) The method for washing a preventive dental device according to (6), in which
the liquid feeding condition includes a supply time for supplying the liquid and a supply stop time for stopping the supply of the liquid when the liquid is intermittently supplied to the branched liquid feeding paths.

According to the method for washing a preventive dental device, by changing lengths of the supply time and the supply stop time according to the identifier, the liquid can be fed under conditions suitable for a use situation.

(8) The method for washing a preventive dental device according to (6), in which
the liquid feeding condition includes a total liquid feeding time for feeding the liquid to the branched liquid feeding paths.

According to the method for washing a preventive dental device, by setting a total time for feeding the liquid to the branched liquid feeding paths, for example, the branched liquid feeding paths can be filled with the liquid without leaking the liquid from tips of the handpieces.

(9) The method for washing a preventive dental device according to (6), further including:
a step of holding, for a specified time, a state in which the branched liquid feeding paths are filled with the liquid, in which
the specified time is changed according to the detected identifier.

According to the method for washing a preventive dental device, an immersion time in the state in which the branched liquid feeding paths are filled with the liquid can be set according to the type and individual of the mixer.

(10) A preventive dental device including:
a plurality of dental handpieces each having a water injection port that injects water;
a body portion to which the dental handpieces are respectively connected and which has an internal liquid feeding path connected to a water supply source; and
a control unit configured to feed the water supplied to the internal liquid feeding path to the dental handpieces, in which
when washing a plurality of branched liquid feeding paths branched from the internal liquid feeding path toward the respective water injection ports of the plurality of dental handpieces by feeding a liquid such as water or a chemical solution to the plurality of branched liquid feeding paths, the control unit supplies the liquid from the water supply source to the internal liquid feeding path, and
when feeding the liquid to the plurality of branched liquid feeding paths from branch points between the internal liquid feeding path and the branched liquid feeding paths to the water injection ports of the respective dental handpieces, the control unit intermittently supplies the liquid to the branched liquid feeding paths.

According to the preventive dental device, by intermittently feeding the liquid to the branched liquid feeding paths to the plurality of dental handpieces, even if a flow path resistance differs for each of the branched liquid feeding paths, the liquid can be reliably fed to each of the branched liquid feeding paths, and the branched liquid feeding paths can be efficiently filled with the liquid.

(11) A program for executing a procedure of a method for washing a preventive dental device, the preventive dental device including a plurality of dental handpieces each having a water injection port that injects water, and a body portion to which the dental handpieces are respectively connected and which has an internal liquid feeding path connected to a water supply source, the preventive dental device feeding the water supplied to the internal liquid feeding path to the dental handpieces, the method for washing a plurality of branched liquid feeding paths branched from the internal liquid feeding path toward the respective water injection ports of the plurality of dental handpieces by feeding a liquid such as water or a chemical solution to the plurality of branched liquid feeding paths, the program causing a computer to execute:
a procedure of supplying the liquid from the water supply source to the internal liquid feeding path; and intermittently supplying the liquid to the branched liquid feeding paths from branch points between the internal liquid feeding path and the branched liquid feeding paths to the water injection ports of the respective dental handpieces when the liquid is fed to the plurality of branched liquid feeding paths.

According to this program, the liquid is intermittently fed to the branched liquid feeding paths to the plurality of dental handpieces. Accordingly, even if the flow path resistance differs for each of the branched liquid feeding paths, the liquid can be reliably fed to each of the branched liquid feeding paths, and the branched liquid feeding paths can be efficiently filled with the liquid.

## Claims

1. A method for washing a preventive dental device, the preventive dental device including a plurality of dental handpieces each having a water injection port that injects water, and a body portion to which the dental handpieces are respectively connected and which has an internal liquid feeding path connected to a water supply source, the preventive dental device feeding the water supplied to the internal liquid feeding path to the dental handpieces, the method for washing a plurality of branched liquid feeding paths branched from the internal liquid feeding path toward the respective water injection ports of the plurality of dental handpieces by feeding a liquid such as water or a chemical solution, the method comprising:
supplying the liquid from the water supply source to the internal liquid feeding path; and intermittently supplying the liquid to the branched liquid feeding paths from branch points between the internal liquid feeding path and the branched liquid feeding paths to the water injection ports of the respective dental handpieces when the liquid is fed to the plurality of branched liquid feeding paths.

2. The method for washing a preventive dental device according to claim 1,
wherein when the liquid is intermittently supplied to the branched liquid feeding paths, a supply time for supplying the liquid is set to be longer than a supply stop time for stopping the supply of the liquid.

3. The method for washing a preventive dental device according to claim 1, further comprising:
when the liquid is fed to the plurality of branched liquid feeding paths, after the feeding of the liquid to any one branched liquid feeding path among the plurality of branched liquid feeding paths is completed,
feeding the liquid to any other one branched liquid feeding path among the plurality of branched liquid feeding paths.

4. The method for washing a preventive dental device according to claim 1,
wherein the liquid is sequentially supplied to each of the dental handpieces when the liquid is intermittently supplied to the plurality of branched liquid feeding paths.

5. The method for washing a preventive dental device according to any one of claims 1 to 4,
wherein the body portion includes a powder storage portion that stores a tooth surface cleaning powder, and a mixer that feeds compressed air into the powder storage portion to generate a powder mixed gas containing the powder, and
wherein any one of the plurality of dental handpieces is a tooth surface cleaning handpiece having an air feeding path that is connected to the mixer and configured to supply the powder mixed gas to a nozzle portion for injection together with the water.

6. The method for washing a preventive dental device according to claim 5, further comprising:
detecting an identifier that is provided in the mixer and differs depending on a type of the mixer by a detection unit provided in the body portion; and
changing a liquid feeding condition for intermittently supplying the liquid to the branched liquid feeding paths, according to a detection result of the identifier by the detection unit.

7. The method for washing a preventive dental device according to claim 6,
wherein the liquid feeding condition includes a supply time for supplying the liquid and a supply stop time for stopping the supply of the liquid when the liquid is intermittently supplied to the branched liquid feeding paths.

8. The method for washing a preventive dental device according to claim 6,
wherein the liquid feeding condition includes a total liquid feeding time for feeding the liquid to the branched liquid feeding paths.

9. The method for washing a preventive dental device according to claim 6, further comprising:
a step of holding, for a specified time, a state in which the branched liquid feeding paths are filled with the liquid,
wherein the specified time is changed according to the detected identifier.

10. A preventive dental device comprising:
a plurality of dental handpieces each having a water injection port that injects water;
a body portion to which the dental handpieces are respectively connected and which has an internal liquid feeding path connected to a water supply source; and
a control unit configured to feed the water supplied to the internal liquid feeding path to the dental handpieces,
wherein when washing a plurality of branched liquid feeding paths branched from the internal liquid feeding path toward the respective water injection ports of the plurality of dental handpieces by feeding a liquid such as water or a chemical solution to the plurality of branched liquid feeding paths, the control unit supplies the liquid from the water supply source to the internal liquid feeding path, and
wherein when feeding the liquid to the plurality of branched liquid feeding paths from branch points between the internal liquid feeding path and the branched liquid feeding paths to the water injection ports of the respective dental handpieces, the control unit intermittently supplies the liquid to the branched liquid feeding paths.

11. A program for executing a procedure of a method for washing a preventive dental device, the preventive dental device including a plurality of dental handpieces each having a water injection port that injects water, and a body portion to which the dental handpieces are respectively connected and which has an internal liquid feeding path connected to a water supply source, the preventive dental device feeding the water supplied to the internal liquid feeding path to the dental handpieces, the method for washing a plurality of branched liquid feeding paths branched from the internal liquid feeding path toward the respective water injection ports of the plurality of dental handpieces by feeding a liquid such as water or a chemical solution to the plurality of branched liquid feeding paths, the program causing a computer to execute:
a procedure of supplying the liquid from the water supply source to the internal liquid feeding path; and intermittently supplying the liquid to the branched liquid feeding paths from branch points between the internal liquid feeding path and the branched liquid feeding paths to the water injection ports of the respective dental handpieces when the liquid is fed to the plurality of branched liquid feeding paths.
